# EUROPÄISCHE PATENTSCHRIFT

(11) **EP 1 485 444 B1**
(45) Veröffentlichungstag und Bekanntmachung des Hinweises auf die Patenterteilung: **27.07.2005**
(21) Anmeldenummer: 02718183.3
(22) Anmeldetag: 07.03.2002
(51) Int. Cl.: C09K 5/20, C23F 11/00, H01M 8/04

(54) **KÜHLMITTEL FÜR BRENNSTOFFZELLEN**
COOLANT FOR FUEL CELLS
PRODUIT REFRIGERANT POUR CELLULES ELECTROCHIMIQUES

(43) Veröffentlichungstag der Anmeldung: 15.12.2004
(73) Patentinhaber: Haertol Chemie GmbH, 39126 Magdeburg (DE)
(72) Erfinder: BRINCK, Carmen, 39108 Magdeburg (DE); DÜHRING, Egon, 39167 Irxleben (DE); HILLERNS, Frank, 20257 Hamburg (DE)
(74) Vertreter: Weber, Thomas Dr.
(86) Internationale Anmeldenummer: PCT/EP2002/002489
(87) Internationale Veröffentlichungsnummer: WO 2003/074626

(56) Entgegenhaltungen:
- WO-A-00/17951
- US-A- 4 683 071
- DATABASE WPI Section Ch, Week 198603 Derwent Publications Ltd., London, GB; Class G04, AN 1986-017617 XP002219561 & JP 60 240778 A (NIPPON SHOKUBAI KAGAKU KOGYO), 29. November 1985 (1985-11-29)
- DATABASE WPI Section Ch, Week 199701 Derwent Publications Ltd., London, GB; Class A26, AN 1997-010200 XP002219562 & SU 1 075 725 A (PETROCHEM PROCESSES INST), 10. April 1996 (1996-04-10)

## Beschreibung

Die Erfindung betrifft eine wässrige Kühlmittelzusammensetzung, umfassend ein wasserlösliches alkoholisches Frostschutzmittel, ein Triazol, ein Amin und/oder ein Aminphosphat. Die Zusammensetzung weist eine geringe elektrische Leitfähigkeit, korrosionsinhibierende Eigenschaften und einen niedrigen Gefrierpunkt auf. Des weiteren betrifft die Erfindung ein Kühlmittelkonzentrat zur Herstellung der erfindungsgemäßen Kühlmittelzusammensetzung sowie deren Verwendung als Kühlmittel für Brennstoffzellen.

### Beschreibung

Der Einsatz von Brennstoffzellen in Automobilen als Alternative zu Otto- und Dieselmotoren gewinnt zunehmend an Bedeutung. Insbesondere beim mobilen Einsatz sind Brennstoffzellen witterungsbedingten Temperaturschwankungen unterworfen, so dass mitunter, je nach Einsatzort, Umgebungstemperaturen von bis zu -35°C auftreten können. Reinstwasser, welches üblicherweise aufgrund seiner hohen Wärmekapazität und seiner guten Verfügbarkeit ein ideales Kühlmittel für Brennstoffzellen darstellt, ist jedoch bei derart niedrigen Außentemperaturen nur bedingt einsetzbar. So muss der Kühlkreislauf mit Fremdenergie, beispielsweise mit einer elektrischen Zusatzheizung beheizt werden. Dem Reinstwasser können alternativ auch Frostschutzmittel, wie etwa Ethylenglykol, beigemischt werden. Derartige Brennstoffzellen mit einer Glykol-Wassermischung als Kühlmittel und einer Zusatzheizung sind in der WO-A-97/21783 beschrieben. Die Verwendung nicht-inhibierter Glykol-Wassermischungen hat jedoch den Nachteil, dass keinerlei Korrosionsschutz gegenüber den Metallen der Fahrzeugkühlsysteme besteht.

Wird hingegen eine Mischung mit handelsüblichen Korrosionsinhibitoren, wie etwa in der WO-A-97/21783 beschrieben verwendet, so steigt die elektrische Leitfähigkeit des resultierenden Kühlmittels auf Werte > 1000 µS/cm, die einen Betrieb in einem Brennstoffzellensystem verbieten. Hohe Leitfähigkeiten sind insbesondere bei Korrosionsschutzmitteln zu beobachten, die ionische oder salzartige Bestandteile aufweisen. Auch die Korrosion der Werkstoffe der Brennstoffzelle, unter Bildung salzartiger Verbindungen, führt zwangsläufig zu einer Erhöhung der Leitfähigkeit des Kühlmediums. Um diesem Effekt entgegenzuwirken schlägt die WO-A-00/17951 die Verwendung von Glykol-Wassermischungen in Kombination mit lonenaustauschern vor. Als nachteilig erweist sich dabei insbesondere der hohe Wartungsaufwand solcher Austauscheranlagen und das Fehlen sonstiger Korrosionsinhibitoren .

Um das mit dem Einsatz von nicht-inhibierten Glycol/Wassermischungen verbundene Korrosionsproblem zu umgehen, schlägt die DE-A-19802490 die Verwendung von Paraffin-Mischungen als Kühlmittel vor. Diese besitzen jedoch nur geringe Wärmeleitfähigkeiten und Wärmekapazitäten, wodurch der hinlängliche Abtransport der auftretenden Wärme oftmals nicht gewährleistet werden kann.

Die Aufgabe der vorliegenden Erfindung ist daher die Bereitstellung eines Kühlmittels, welches nicht nur einen niedrigen Gefrierpunkt sondern auch korrosionsinhibierende Eigenschaften bei gleichzeitig geringer elektrische Leitfähigkeit, vorzugsweise < 70 µS/cm, aufweist.

Die Aufgabe wurde erfindungsgemäß gelöst durch eine Kühlmittelzusammensetzung umfassend in wässriger Lösung, bezogen auf die Gesamtzusammensetzung,
(A) 40 bis 80 Gew.-% wenigstens eines wasserlöslichen alkoholischen Frostschutzmittels;
(B) 0,005 bis 0,4 Gew.-% wenigstens eines Triazols;
(C) 0,005 bis 2,5 Gew.-% wenigstens eines Amins und
(D) 0,0005 bis 2,5 Gew.-% wenigstens eines Aminphosphats, dadurch gekennzeichnet dass sie eine elektrische Leitfähigkeit < 70 µS/cm aufweist.

Es versteht sich von selbst, dass der zu 100 Gew.-% der Gesamtzusammensetzung fehlende Rest, welcher sich auf der Grundlage der Bestandteile (A), (B), (C) und (D) ergibt, Wasser ist.

Die erfindungsgemäßen Kühlmittelzusammensetzungen weisen hohe Wärmekapazitäten, Gefrierpunkte bis zu -35°C und korrosionsinhibierenden Eigenschaften in Kombination mit geringen elektrischen Leitfähigkeiten von vorzugsweise < 70 µS/cm auf.

Eine weitere Ausführungsform der vorliegenden Erfindung betrifft ein Kühlmittelkonzentrat zur Herstellung der Kühlmittelzusammensetzung, dadurch gekennzeichnet, dass das Konzentrat
(A) 90 bis 99 Gew.-% wenigstens eines wasserlöslichen alkoholischen Frostschutzmittels;
(B) 0,0125 bis 0,5 Gew.-% wenigstens eines Triazols;
(C) 0,0125 bis 5 Gew.-% wenigstens eines Amins und/oder;
(D) 0,00125 bis 5 Gew.-% wenigstens eines Aminphosphats,
bezogen auf die Gesamtzusammensetzung des Konzentrats umfassend (A), (B), (C) und (D), umfasst.

Bevorzugte Ausgestaltungen der Erfindung ergeben sich aus den Unteransprüchen.

Die erfindungsgemäßen Kühlmittelzusammensetzungen sind durch einfaches Verdünnen des Kühlmittelkonzentrats mit Wasser erhältlich.

Eine weitere Ausführungsform der vorliegenden Erfindung betrifft die Verwendung der erfindungsgemäßen Kühlmittelzusammensetzung als Kühlmittel für Brennstoffzellen.

### Frostschutzmittel (A)

Die zur Herstellung der erfindungsgemäßen Kühlmittelzusammensetzung geeigneten wasserlöslichen alkoholischen Frostschutzmittel (A) sind ausgewählt aus flüssigen Alkoholen, Diolen und/oder Polyolen. Vorzugsweise ist das wasserlösliche alkoholische Frostschutzmittel (A) ausgewählt aus der Gruppe bestehend aus Alkoholen mit 1 bis 3 Hydroxylgruppen und deren wasserlöslichen Derivaten. Dabei handelt es sich um Alkohole, Diole und Triole sowie die Mono-C₁-C₄-alkylether der Diole und Triole. Beispiele geeigneter Alkohole sind 1- oder 2-Propanol, Mono-, Di-, Tri- oder Tetraethylenglykol, Mono-, Di-, Tri- oder Tetrapropylenglykol, oder jeweils deren wassermischbare Mono-C₁-C₄-alkylether der genannten Diole (Glycole) und Triole. Selbstverständlich können auch Gemische der genannten Frostschutzmittel eingesetzt werden.

Besonderer Vorzug ist jedoch Mono-, Di-, Tri- oder Tetraethylenglykol, oder Mono-, Di-, Tri- oder Tetrapropylenglykol oder deren Gemischen und Mono-C₁-C₄-alkylethern gegeben, soweit diese eine gute Wassermischbarkeit aufweisen.

Die erfindungsgemäße Zusammensetzung umfasst, in Abhängigkeit von der gewünschten Frostschutzwirkung, 40 bis 80 Gew.-%, bevorzugt 50 Gew.-%, besonders bevorzugt 70 Gew.-% der Frostschutzmittel (A), bezogen auf die wässrige Gesamtzusammensetzung.

### Triazole (B)

Den in der erfindungsgemäßen Zusammensetzung enthaltenen Triazolen kommen insbesondere die Aufgabe zu, die Korrosion von Kupfer und Kupferlegierungen wie beispielsweise Messing und Bronze zu inhibieren.

Erfindungsgemäß umfassen die Zusammensetzungen 0,005 bis 0,40 Gew.-%, vorzugsweise 0,01 bis 0,1 Gew.-% wenigstens eines Triazols (B). Geeignete Triazole (B) sind vorzugsweise aromatische Triazole, die ausgewählt sind aus der Gruppe bestehend aus Benzotriazol und Tolyltriazol oder N-substituierten Triazolen gemäß der nachfolgenden Formel I 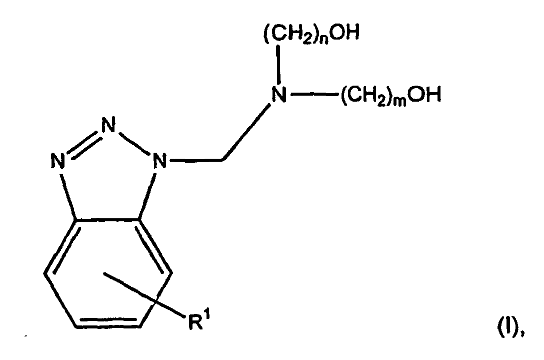 wobei n und m unabhängig voneinander 1 oder 2, vorzugsweise n = m ist und R¹ Wasserstoff oder ein Kohlenwasserstoffrest mit 1 bis 4 Kohlenstoffatomen, vorzugsweise ein Methylrest ist.

### Amine (C)

Die zur Herstellung der erfindungsgemäßen Zusammensetzung-verwendeten Amine (C) sind wasserlösliche Verbindungen der Formel NR²R³R⁴ wobei R² eine verzweigte oder unverzweigte Kohlenwasserstoffgruppe mit 2 bis 15, vorzugsweise 2 bis 12, besonders bevorzugt 2 bis 18 Kohlenstoffatomen ist und R³ und R⁴ unabhängig voneinander ausgewählt sind aus Wasserstoff oder wie für R² definiert ist. Die Reste R², R³ und R⁴ können unabhängig voneinander jeweils wenigstens eine Hydroxylgruppe aufweisen.

Erfindungsgemäß umfassen die Zusammensetzungen 0,005 bis 2,5 Gew.-%, vorzugsweise 0,5 bis 1,5 Gew.-% wenigstens eines Amins (C).

Geeignete Amine (C) sind insbesondere sekundäre und tertiäre Amine, die ausgewählt sind aus der Gruppe bestehend aus Diethylamin, Triethylamin, Diisopropylpropylamin, Triisopropylamin, Diethanolamin, Triethanolamin, wobei Trethanolamin besonders bevorzugt ist.

### Aminphosphate (D)

Die efindungsgemäß geeigneten Aminphosphate (D) sind Verbindungen gemäß der nachfolgenden Formel II.

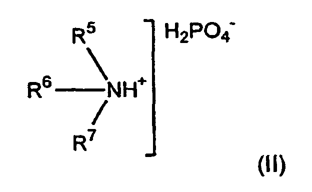

Dabei sind die Reste R⁵, R⁶ und/oder R⁷ unabhängig voneinander ausgewählt aus Wasserstoff und verzweigten oder unverzweigten Kohlenwasserstoffgruppen mit 1 bis 12, vorzugsweise 2 bis 8, besonders bevorzugt 2 bis 6 Kohlenstoffatomen. Die Reste R⁵, R⁶ und/oder R⁷ können unabhängig voneinander wenigstens eine Hydroxylgruppe tragen.

Insbesondere finden Aminphosphate (D) in den erfindungsgemäßen Zusammensetzungen Einsatz, die ausgewählt sind aus der Gruppe bestehend aus Triethanolaminphosphat, Diethanolaminphosphat, Ethanolaminphosphat oder deren Mischungen. Besonders bevorzugt ist die Verwendung von Triethanolaminphosphat.

Die Zusammensetzungen umfassen, bezogen auf die Gesamtzusammensetzung, 0,0005 bis 2,5 Gew.-%, bevorzugt 0,0005 bis 2 Gew.-%, besonders bevorzugt 0,0005 bis 1,5 Gew.-% wenigstens eines der zuvor genannten Aminphosphate.

In einer besonders bevorzugten Ausgestaltung umfassen die erfindungsgemäßen Zusammensetzungen Monoethylenglycol, Triethanolamin, Triethanolaminphosphat, Tolytriazol und/oder Benzotriazol in den oben angegebenen allgemeinen oder bevorzugten Mengenbereichen.

Die erfindungsgemäßen Kühlmittelzusammensetzungen sind durch einfaches Mischen der entsprechenden Mengen der zuvor beschrieben Komponenten mit Wasser erhältlich. Zur Reduzierung des Volumens können Kühlmittelkonzentrate hergestellt werden, welche
(A) 90 bis 99 Gew.-% wenigstens eines wasserlöslichen alkoholischen Frostschutzmittels;
(B) 0,0125 bis 0,5 Gew.-% wenigstens eines Triazols;
(C) 0,0125 bis 5 Gew.-% wenigstens eines Amins und/oder;
(D) 0,00125 bis 5 Gew.-% wenigstens eines Aminphosphats,
bezogen auf die Gesamtzusammensetzung des Konzentrats, umfassen.

Die Konzentrate werden erst beim Gebrauch mit der entsprechenden Menge Wasser, unter Erhalt der erfindungsgemäßen der erfindungsgemäßen Kühlmittelzusammensetzung, gemischt. Eine solche Vorgehensweise erleichtert die Lagerung und den Transport der Kühlmittel. Zur weiteren Erspamis von Transportkosten ist es jedoch auch denkbar ein Vorgemisch, umfassend die korrosionsinhibierenden Komponenten B, C und D in den notwendigen Mengen, herzustellen, welches dann bei Gebrauch mit den entsprechenden Mengen an handelsüblichen flüssig alkoholischen Frostschutzmitteln und Wasser versetzt wird.

Zur Reduktion von Kalkhärte Ablagerungen in den Kühlkanälen des Kühlsystems und zur Verringerung der Leitfähigkeit empfiehlt es sich die Verwendung von vollentsalztem (VE) Wasser.

Aufgrund der geringen elektrischen Leitfähigkeit von bis zu 70 µS/cm, vorzugsweise bis zu 60 µS/cm, besonders bevorzugt bis zu 50 µS/cm eignen sich die erfindungsgemäßen Korrosionsschutzmittel insbesondere zum Einsatz in Kühlsystemen von Brennstoffzellen und ähnlichen Kühlsystemen, welche sich in Kontakt oder in Nachbarschaft zu spannungsführenden Bauteilen befinden.

Bei Verwendung der erfindungsgemäßen Kühlmittel unterliegen insbesondere die für Brennstoffzellen typischen metallischen Werkstoffe, wie z.B. Kupfer, Messing, Stahl, Grauguss und Aluminiumlegierungen, wie z.B. AlSi₆Cu₃, AlMn und AlSi₁₂, einer verminderten Korrosion.

Der Temperaturbereich in dem die erfindungsgemäßen Kühlmittel eingesetzt werden können, lässt sich anhand des Anteils des wasserlöslichen alkoholischen Frostschutzmittels innerhalb eines Temperaturintervalls von -35 bis +135°C, vorzugsweise -30 bis 130°C, besonders bevorzugt -25 bis 120°C nach Bedarf variieren.

Unabhängig von den zuvor genannten Korrosionsinhibitoren kann die Kühlmittelzusammensetzung weitere Korrosionsinhibitoren des Standes der Technik enthalten. Maßgeblich für die Auswahl solcher Inhibitoren ist jedoch, dass diese die Leitfähigkeit des Kühlmittels nicht erhöhen. Daher sind insbesondere salzartige und ionische Korrosionsinhibitoren ungeeignet.

Die vorliegende Erfindung soll anhand der folgenden Ausführungsbeispiele näher erläutert werden, ohne sie jedoch auf diese Beispiele zu beschränken.

### Ausführungsbeispiele

Zur Verdeutlichung des erfindungsgemäßen Effektes, wurden erfindungsgemäße und kommerziell erhältliche Kühlmittelzusammensetzungen im Korrosionsschutztest gemäß ASTM D 1384-94 geprüft und deren Korrosionsschutzwirkung und Leitfähigkeit miteinander verglichen.

Zur Durchführung der Korrosionsuntersuchungen wurden standardisierte Probekörper von Metallen, die in typischer Weise in den Kühlsystemen einer Brennstoffzelle vorkommen, 336 Stunden bei einer Temperatur von 88°C unter Belüftung (100 ml Luft/min) in die Kühlmittelzusammensetzungen eingetaucht. Die Bewertung der korrosionsinhibierenden Wirkung der unterschiedlichen Zusammensetzung erfolgte anhand der Gewichtsveränderung der jeweiligen Probekörper. Die Versuche wurden jeweils dreifach durchgeführt und der Durchschnittliche Wert der Gewichtsveränderung der Probekörper für jedes Metall bestimmt. Vor Versuchsbeginn wurden die Probekörper mit einer feuchten Scheuerbürste unter Verwendung von gemahlenem Bimssteinpulver glänzend blank gerieben, zunächst mit Wasser, dann mit Aceton gespült, getrocknet und abschließend gewogen. Nach Versuchsende wurden die Korrosionsprodukte auf den Probekörpern durch Abbürsten und durch Eintauchen in Säurelösungen entfernt. Danach wurden die Probekörper wiederum gespült, getrocknet und gewogen.

Die Tabelle 1 enthält die Gewichtsverluste (in g/m²) für unterschiedliche Metalle nach Eintauchen in die erfindungsgemäßen Kühlmittelzusammensetzungen, während die in Tabelle 2 untersuchten Probekörper in kommerziell erhältliche Kühlmittelzusammensetzungen eingetaucht wurden.

Die in den Tabellen aufgeführten Leitfähigkeiten der Kühlmittelzusammensetzungen wurden mit Hilfe eines Leitfähigkeitsmessgerätes (LF 95 der Firma WTW) durch einfaches Eintauchen der Messzelle in die jeweilige Lösung bei Raumtemperatur (20°C), bestimmt.

Der Späne-Filter-Test wurde gemäß DIN 51360 (Teil 2) durchgeführt.

Bei den für die Vergleichsbeispiele 5 und 6 verwendeten Zusammensetzungen sind handelsübliche Kühlmittelzusammensetzungen des Standes der Technik herangezogen worden.

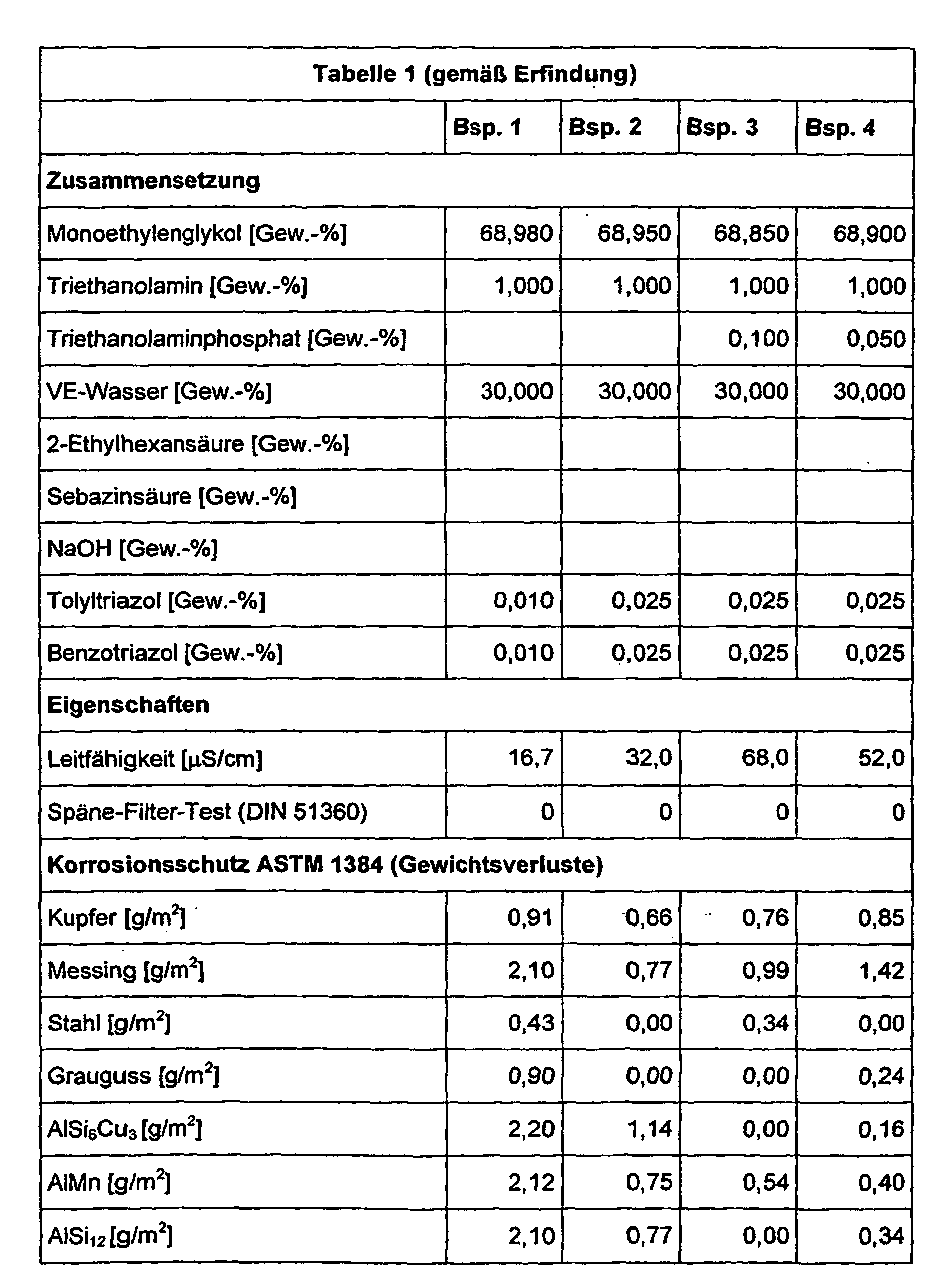

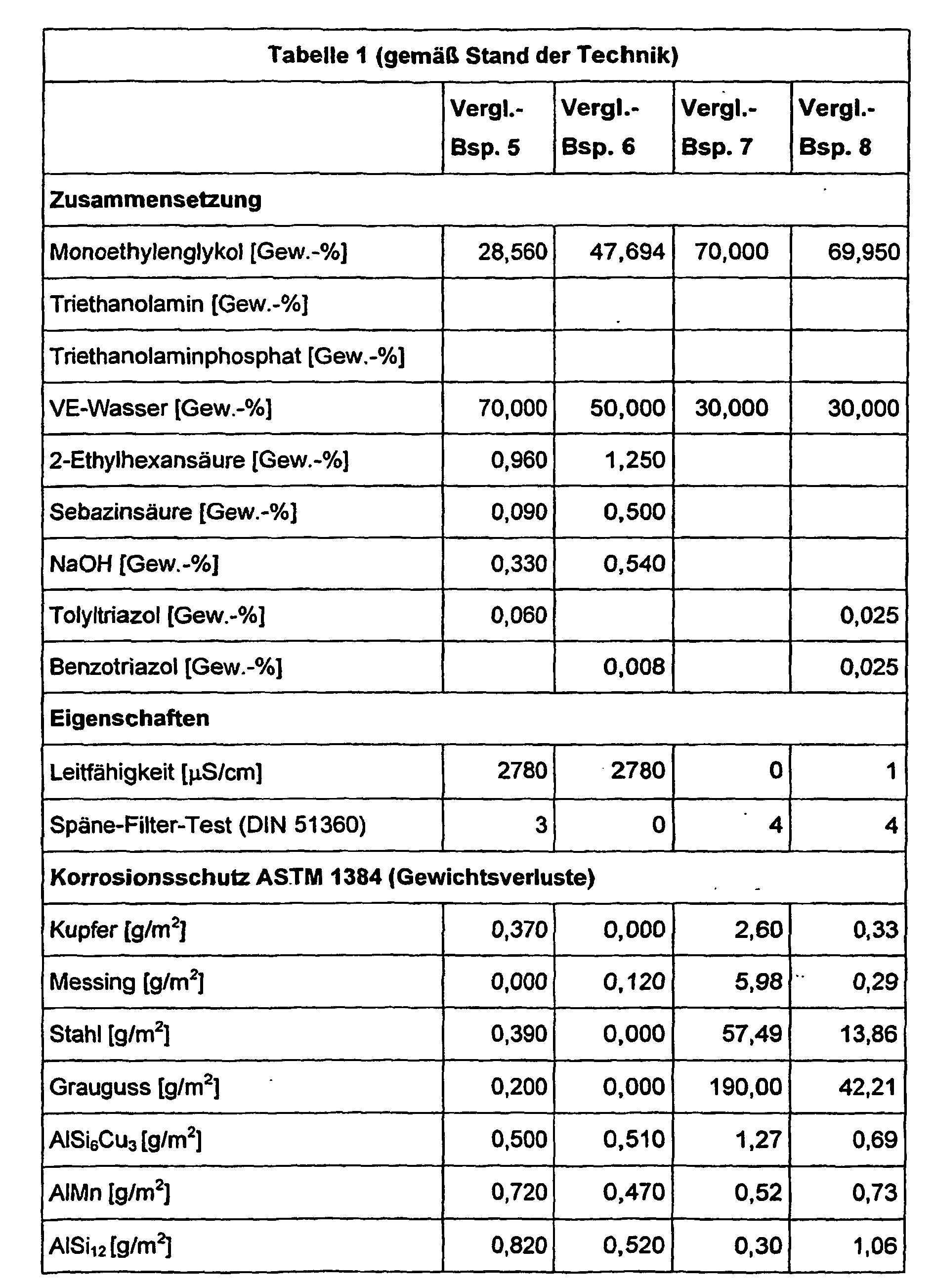

## Patentansprüche

1. Kühlmittelzusammensetzung umfassend in wässriger Lösung, bezogen auf die Gesamtzusammensetzung.
(A) 40 bis 80 Gew.-% wenigstens eines wasserlöslichen alkoholischen Frostschutzmittels;
(B) 0,005 bis 0,4 Gew.-% wenigstens eines Triazols;
(C) 0,005 bis 2.5 Gew.-% wenigstens eines Amins und
(D) 0,0005 bis 2,5 Gew.-% wenigstens eines Aminphosphats;
**dadurch gekennzeichnet, dass** sie eine elektrische Leitfähigkeit < 70 µS/cm aufweist.

2. Zusammensetzung nach irgendeinem der vorherigen Ansprüche, **dadurch gekennzeichnet, dass** das wasserlösliche alkoholische Frostschutzmittel (A) ausgewählt ist aus der Gruppe bestehend aus Alkoholen mit 1 bis 3 Hydroxylgruppen und deren wasserlöslichen Derivaten.

3. Zusammensetzung nach Anspruch 2, **dadurch gekennzeichnet, dass** der Alkohol ausgewählt ist aus der Gruppe bestehend aus 1- oder 2-Propanol, Mono-, Di-, Tri- oder Tetraethylenglykol, Mono-, Di-, Tri- oder Tetrapropylenglykol, oder jeweils deren wassermischbaren Mono-C₁-C₄-alkylethern oder Gemischen der genannten Alkohole.

4. Zusammensetzung nach irgendeinem der vorherigen Ansprüche, **dadurch gekennzeichnet, dass** das Triazol (B) ausgewählt ist aus der Gruppe bestehend aus Benzotriazol, Tolyltriazol und N-substituierten Triazolen gemäß der nachfolgenden Formel I 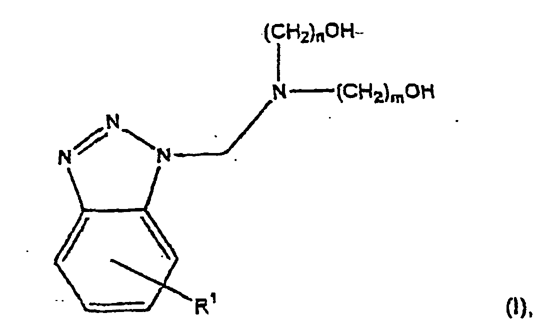 wobei n und m unabhängig voneinander = 1 oder 2 ist und R¹ Wasserstoff oder ein Kohlenwasserstoffrest mit 1 bis 4 Kohlenstoffatomen ist oder Gemischen der zuvor genannten Trizaole.

5. Zusammensetzung nach irgendeinem der vorherigen Ansprüche, **dadurch gekennzeichnet, dass** die Amine (C) Verbindungen der Formel NR²R³R⁴ sind, wobei R² eine verzweigte oder unverzweigte Kohlenwasserstoffgruppe mit 2 bis 12 Kohlenstoffatomen ist und R³ und R⁴ unabhängig Wasserstoff oder wie für R² definiert ist.

6. Zusammensetzung nach irgendeinem der vorherigen Ansprüche, **dadurch gekennzeichnet, dass** die Amine (C), ausgewählt sind aus der Gruppe bestehend aus Diethylamin, Triethylamin, Diisopropylamin, Triisopropylamin, Diethanolamin, Triethanolamin.

7. Zusammensetzung nach irgendeinem der vorherigen Ansprüche, **dadurch gekennzeichnet, dass** die Aminphosphate (D) Verbindungen gemäß nachfolgenden Formel II sind 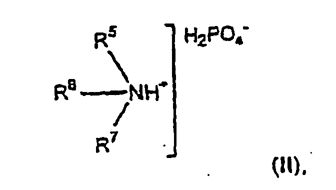 wobei die Reste R⁵, R⁶ und/oder R⁷ unabhängig voneinander ausgewählt sind aus Wasserstaff und verzweigten oder unverzweigten Kohlenwasserstoffgruppen mit 1 bis 12 Kohlenstoffatomen.

8. Zusammensetzung nach Anspruch 7, **dadurch gekennzeichnet, dass** die Aminphosphate (D) ausgewählt sind aus der Gruppe bestehend aus Triethanolaminphosphat, Diethanolaminphosphat, Ethanolaminphosphat.

9. Zusammensetzung nach irgendeinem der vorherigen Ansprüche **dadurch gekennzeichnet, dass** sie Monoethylenglycol, Triethanolamin. Triethanolaminphosphat, Tolytriazol und/oder Benzotriazol umfasst.

10. Kühlmittelkonzentrat zur Herstellung der Kühlmittelzusammensetzung gemäß irgendeinem der vorherigen Ansprüche, **dadurch gekennzeichnet, dass** das Konzentrat
(A) 90 bis 99 Gew.-% wenigstens eines wasserlöslichen alkoholischen Frostschutzmittels;
(B) 0,0125 bis 0,5 Gew.-% wenigstens eines Triazols;
(C) 0,0125 bis 5 Gew.-% wenigstens eines Amins und
(D) 0,00125 bis 5 Gew.-% wenigstens eines Aminphosphats,
bezogen auf die Gesamtzusammensetzung des Konzentrats, umfasst.

11. Verwendung der Zusammensetzung gemäß irgendeinem der vorherigen Ansprüche als Kühlmittel für Brennstoffzellen.

## Claims

1. A coolant composition, comprising in an aqueous solution, based on the total composition:
(A) from 40 to 80% by weight of at least one water-soluble alcoholic anti-freeze agent;
(B) from 0.005 to 0.4% by weight of at least one triazole;
(C) from 0.005 to 2.5% by weight of at least one amine; and
(D) from 0.0005 to 2.5% by weight of at least one amine phosphate;
**characterized by** having an electric conductivity of < 70 µS/cm.

2. The composition according to any of the preceding claims, **characterized in that** said water-soluble alcoholic anti-freeze agent (A) is selected from the group consisting of alcohols with 1 to 3 hydroxy groups and their water-soluble derivatives.

3. The composition according to claim 2, **characterized in that** said alcohol is selected from the group consisting of 1- or 2-propanol, mono-, di-, tri- or tetraethylene glycol, mono-, di-, tri- or tetrapropylene glycol, or their respective water-miscible mono-C₁-C₄-alkyl ethers, or mixtures of said alcohols.

4. The composition according to any of the preceding claims, **characterized in that** said triazole (B) is selected from the group consisting of benzotriazole, tolyltriazole and N-substituted triazoles according to the following formula I 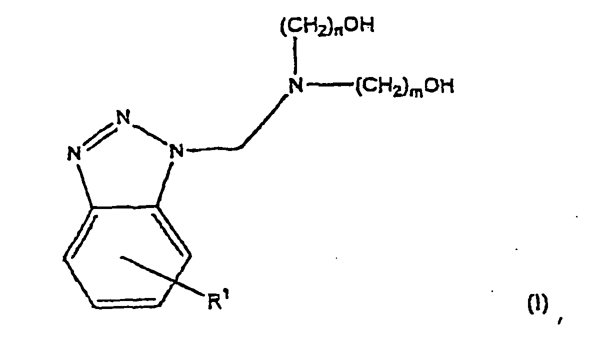 wherein n and m are independently 1 or 2, and R¹ is hydrogen or a hydrocarbyl radical with 1 to 4 carbon atoms, or mixtures of the above mentioned triazoles.

5. The composition according to any of the preceding claims, **characterized in that** said amines (C) are compounds of formula NR²R³R⁴, wherein R² is a branched or unbranched hydrocarbyl group with 2 to 12 carbon atoms, and R³ and R⁴ are independently hydrogen or a group as defined for R².

6. The composition according to any of the preceding claims, **characterized in that** said amines (C) are selected from the group consisting of diethylamine, triethylamine, diisopropylamine, triisopropylamine, diethanolamine, triethanolamine.

7. The composition according to any of the preceding claims, **characterized in that** said amine phosphates (D) are compounds according to the following formula II: 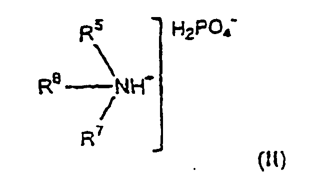 wherein the radicals R⁵, R⁶ and/or R⁷ are independently selected from hydrogen and branched or unbranched hydrocarbyl groups with 1 to 12 carbon atoms.

8. The composition according to claim 7, **characterized in that** said amine phosphates (D) are selected from the group consisting of triethanolamine phosphate, diethanolamine phosphate, ethanolamine phosphate.

9. The composition according to any of the preceding claims, **characterized by** comprising monoethylene glycol, triethanolamine, triethanolamine phosphate, tolyltriazole and/or benzotriazole.

10. A coolant concentrate for preparing the coolant composition according to any of the preceding claims, **characterized in that** said concentrate comprises:
(A) from 90 to 99% by weight of at least one water-soluble alcoholic anti-freeze agent;
(B) from 0.0125 to 0.5% by weight of at least one triazole;
(C) from 0.0125 to 5% by weight of at least one amine; and
(D) from 0.00125 to 5% by weight of at least one amine phosphate;
based on the total composition of the concentrate.

11. Use of the composition according to any of the preceding claims as a coolant for fuel cells.

## Revendications

1. Composition réfrigérante comprenant en solution aqueuse, par rapport à la composition totale,
(A) 40 à 80 % en poids d'au moins un agent antigel alcoolique hydrosoluble ;
(B) 0,005 à 0,4 % en poids d'au moins un triazole ;
(C) 0,005 à 2,5 % en poids d'au moins une amine ; et
(D) 0,0005 à 2,5 % en poids d'au moins un aminophosphate ;
**caractérisée en ce qu'**elle présente une conductivité électrique < 70 µs/cm.

2. Composition selon l'une quelconque des revendications précédentes, **caractérisée en ce que** l'agent antigel alcoolique hydrosoluble (A) est choisi dans le groupe constitué des alcools ayant 1 à 3 groupes hydroxyle et leurs dérivés hydrosolubles.

3. Composition selon la revendication 2, **caractérisée en ce que** l'alcool est choisi dans le groupe constitué du 1- ou 2-propanol, des mono-, di-, tri- ou tétraéthylèneglycols, des mono-, di-, tri- ou tétrapropylèneglycols ou, respectivement, de leurs monoéthers d'alkyle en C₁ à C₄ ou des mélanges des alcools cités.

4. Composition selon l'une quelconque des revendications précédentes, **caractérisée en ce que** le triazole (B) est choisi dans le groupe constitué du benzotriazole, du tolyltriazole et des triazoles N-substitués selon la formule I suivante : 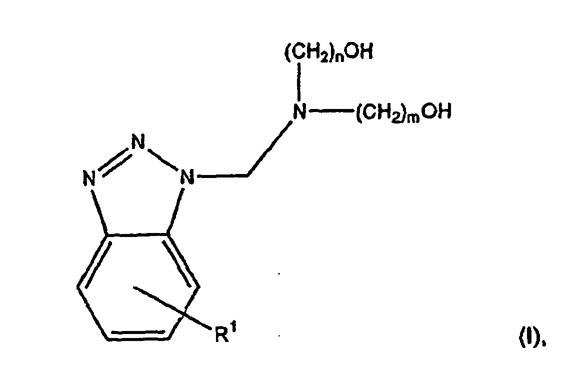 dans laquelle n et m sont, indépendamment l'un de l'autre, égaux à 1 ou 2 et R¹ est de l'hydrogène ou un radical hydrocarboné avec 1 à 4 atomes de carbone ou de mélanges des triazoles précités.

5. Composition selon l'une quelconque des revendications précédentes, **caractérisée en ce que** les amines (C) sont des composés de formule NR²R³R⁴, dans laquelle R² est un groupe hydrocarboné ramifié ou non ramifié ayant 2 à 12 atomes de carbone et R³ et R⁴ représentent indépendamment de l'hydrogène ou est tel que défini pour R².

6. Composition selon l'une quelconque des revendications précédentes, **caractérisée en ce que** les amines (C) sont choisies dans le groupe constitué de la diéthylamine, de la triéthylamine, de la diisopropylamine, de la triisopropylamine, de la diéthanolamine et de la triéthanolamine.

7. Composition selon l'une quelconque des revendications précédentes, **caractérisée en ce que** les aminophosphates (D) sont des composés selon la formule II suivante : 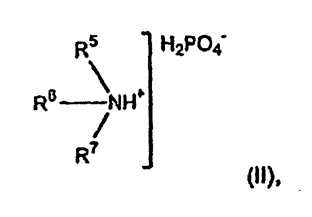 dans laquelle les radicaux R⁵, R⁶ et/ou R⁷ sont choisis, indépendamment les uns des autres, parmi l'hydrogène et des groupes hydrocarbonés ramifiés ou non ramifiés ayant 1 à 12 atomes de carbone.

8. Composition selon la revendication 7, **caractérisée en ce que** les aminophosphates (D) sont choisis dans le groupe constitué du phosphate de triéthanolamine, du phosphate de diéthanolamine et du phosphate d'éthanolamine.

9. Composition selon l'une quelconque des revendications précédentes, **caractérisée en ce qu'**elle comprend du monoéthylèneglycol, de la triéthanolamine, du phosphate de triéthanolamine, du tolyltriazole et/ou du benzotriazole.

10. Concentré d'agent réfrigérant pour la fabrication de la composition réfrigérante selon l'une quelconque des revendications précédentes, **caractérisé en ce que** le concentré comprend :
(A) 90 à 99 % en poids d'au moins un agent antigel alcoolique hydrosoluble ;
(B) 0,0125 à 0,5 % en poids d'au moins un triazole ;
(C) 0,0125 à 5 % en poids d'au moins une amine ; et
(D) 0,00125 à 5 % en poids d'au moins un aminophosphate par rapport à la composition totale du concentré.

11. Utilisation de la composition selon l'une quelconque des revendications précédentes comme agent réfrigérant pour des piles à combustible.
